# EUROPEAN PATENT APPLICATION

(11) **EP 1 213 114 A2**
(43) Date of publication of application: **12.06.2002**
(21) Application number: 00970346.3
(22) Date of filing: 04.07.2000
(51) Int. Cl.: B29B 17/00

(54) **METHOD FOR PROCESSING POLYMER MATERIALS SUCH AS RUBBER AND INSTALLATION TO CARRY OUT SUCH METHOD**

(30) Priority: 03.08.1999 RU 99116957
(71) Applicant: Efremov, Vladimir Sergeevich, Nizhnekamsk, Respublika Tatarstan, 423550 (RU)
(72) Inventor: Efremov, Vladimir Sergeevich, Nizhnekamsk, Respublika Tatarstan, 423550 (RU)
(74) Representative: Held, Stephan, Dr.rer.nat., Dipl.-Chem.
(86) International application number: RU0000270
(87) International publication number: WO0109236

(57) **Abstract**

A method and an installation for processing polymer materials, e.g., rubber, are proposed in which a cooling chamber 6 is positioned substantially vertically, dosage means are arranged at an input into the cooling chamber 6 and at an exit therefrom, are positioned coaxially in respect to the cooling chamber and are made with the possibility of controlling the supply and removal of processed rubber crumbs. Openings for the supply or cooling air are positioned in the upper and lower parts of the cooling chamber, and an opening for the removal of spent air is positioned in the middle part of the chamber. The cooling chamber comprises at least one annular chamber positioned coaxially in respect to the cooling chamber with the formation of a gap between them and having a greater size in the radial direction than the cooling chamber. The ratio of the size of the annular chamber to that of the cooling chamber is within the range of from about 1.1 to about 1.2 (Fig. 2).

## Description

### Field of the Invention

The present invention relates to a method for processing polymer materials, e.g., rubber, and to an installation for implementing the method, which may be used for the processing of polymer materials, rubber articles, worn-out tires in order to obtain material suitable for reuse.

### Background of the Invention

A significant increase in the production of tires and other rubber articles has resulted in a huge increase in the amount of worn-out rubber materials which should be destroyed. A method for destroying worn-out tires is well-known, e.g., by burning them. However, such a method results in significant contamination of the environment.

Furthermore, several methods of cryogenic pulverization exist, wherewith the material may be pulverized for further processing. However, these methods are relatively expensive, since a substantial amount of liquid nitrogen or other cryogenic material, e.g., solid CO₂, is necessary for the cryogenic processing process in order to reduce the temperature of the material being processed to the required temperature.

An installation is known for processing tires, which comprises a unit for coarse grinding tires, a unit for fine grinding the produced rubber pieces of material and a cooling unit, including a turborefrigeration machine and a cooling chamber, which are connected to each other by a pipeline (Utility model RF No. 9185, IPC B 29 B 17/00).

This known installation does not ensure the necessary ecological purity of the spent air, directed from the cooling chamber into the turborefrigeration machine, which causes it to be clogged up and accordingly causes frequent stops in the process of operation.

The method for processing tires and other recycled rubber materials, which is most similar to the present method is the method comprising grinding tires and other recycled materials into small pieces, cooling the ground material to cryogenic temperatures within the range of from -90 to -130^{°}C with the aid of an installation for cooling air, pulverizing the cooled material to obtain pulverized material, screening the pulverized material to separate the unpulverized parts, separating the cord and other metallic parts from the pulverized material in order to obtain fine rubber crumbs (Patent US No. 5634599, IPC B 02 C 19/12).

The installation most similar to the proposed installation is the installation for processing rubber and other polymer materials, which comprises a device for cooling air, which serves to cool air coming in from the atmosphere, a chamber for cooling rubber and orher polymer materials, which is connected to the device for cooling air by means of a pipeline for supplying cooled air into the cooling chamber, includes an opening for the input of material into the cooling chamber, all opening for the exit of material from that chamber, openings for supplying and removing cooled air and a pipeline for removing air from the cooling chamber, which connects the latter with the device for cooling air (Patent US No. 5408846, IPC F 25 D 25/02, F 25 D 9/00).

A drawback of the method described above and the installation for processing rubber and other polymer materials is the substantial consumption of electric power because of the use of rotating members for supplying movement to the material being processed in the cooling chamber, the electric power being supplied to these members from an electric motor, which results in an increase of the cost of the installation. Another drawback is the constant clogging of the device for cooling air with small particles of the rubber material being processed because the cooled air coming into the device for cooling air from the cooling chamber is not pure enough, which results in frequent stops of the installation and accordingly to a reduction of the efficiency of its operation, and also to contamination of the environment because of the emission of contaminated air into the atmosphere.

### Summary of the Invention

The object at the base of the invention is to create a method and installation for processing polymer materials, e.g., rubber, which would make it possible to return cooled air from a cooling chamber back into a device for cooling air, which cooled air is substantially pure without any impurities or small particles of the material being processed, ensuring sufficiently stable conditions of operation of the installation, which would make it possible to significantly reduce power consumption and accordingly the cost, increase the efficiency and essentially completely prevent contamination of the environment.

This object is achieved in that in a method for processing polymer materials. e.g., rubber, a cooling chamber is arranged substantially vertically, rubber crumbs are fed into a cooling chamber downwards under the action of gravity in order to provide for their rapid and intensive cooling, cooled air is fed into upper and lower parts of the cooling chamber and spent air is removed from the middle part of the cooling chamber in order to provide uniform cooling of the rubber crumbs, uniform passage of the cooled air and its additional purification by means of making at least one annular chamber positioned coaxially in respect to the cooling chamber with the formation of a gap between them are provided, wherein simultaneously with the supply and removal of a flow of the cooled air, additional purification of the air being cooled in the cooling chamber is carried out by making gaps between the cooling chamber and at least one annular chamber, and also by controlling the supply and removal of rubber crumbs in the cooling chamber by means of dosage means.

In accordance with the invention, the method comprises the additional step of grinding cooled rubber crumbs in order to obtain a fine rubber powder, which step is carried out directly after the step of cooling rubber crumbs to low temperatures in the cooling chamber.

A cyclone and at least one filter are provided on the pipeline for removal of air from the cooling chamber in order to attain additional purification of air emitted from the cooling chamber. As a result of such arrangement, air, which is substantially pure without any impurities, is fed back into the device for cooling air, and then is ejected into the atmosphere without contaminating it.

The object of the invention is also attained in that in an installation for processing polymer materials, e.g., rubber, a cooling chamber is positioned substantially vertically, wherewith dosage means are arranged at an input into the cooling chamber and at an outlet therefrom, the dosage means being positioned coaxially in respect to the cooling chamber and made with the possibility of controlling the supply of rubber crumbs being processed into the chamber and removal therefrom, openings for the supply of cooled air are provided in the upper and lower parts of the cooling chamber, and an opening for removal of spent air is provided in the middle part of that chamber, wherewith the cooling chamber comprises at least one annular chamber positioned coaxially in respect to the cooling chamber with the formation of a gap between them and having a larger size in a radial direction than the cooling chamber. Wherewith, the ratio of the size of the annular chamber to that of the cooling chamber is within the range of from about 1.1 to about 1.2.

It is preferable that the installation include a means for additionally grinding the cooled rubber crumbs, which is positioned directly after a cooling unit.

It is advisable that a cyclone and at least one filter be mounted on the pipeline for removing the air emitted from the cooling chamber.

It is desirable that the dosage means, which are made in the form of a drum and serve for the uniform loading and unloading of the rubber crumbs being processed, be provided with vanes, at the ends of which rubber seals are arranged to prevent the inflow of warm air therein from the atmosphere.

Wherein, it is desirable that in order to provide control of the cooling effect of the cooling device, the installation comprise control means, which are made in the form of valves and are arranged on the pipeline for supply of cooled air.

It is also advisable that the installation include a discharge means which is made in the form of a belt conveyor provided with vanes and is positioned coaxially in respect to the cooling chamber and serves for maintaining the necessary level of the rubber crumbs being processed in the cooling chamber and for uniformly unloading them.

### Brief Description of the Drawings

Further, the features and advantages of the present invention, and also the principle of its operation are explained more comprehensively by means of an example of embodiment of the invention, which is shown in the drawings, in which:

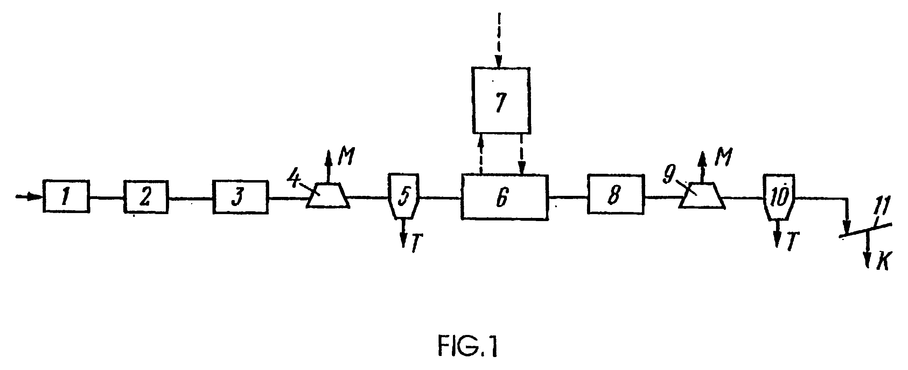

Fig. 1 shows a schematic view of the installation;
Fig. 2 shows a schematic view of cooling unit;

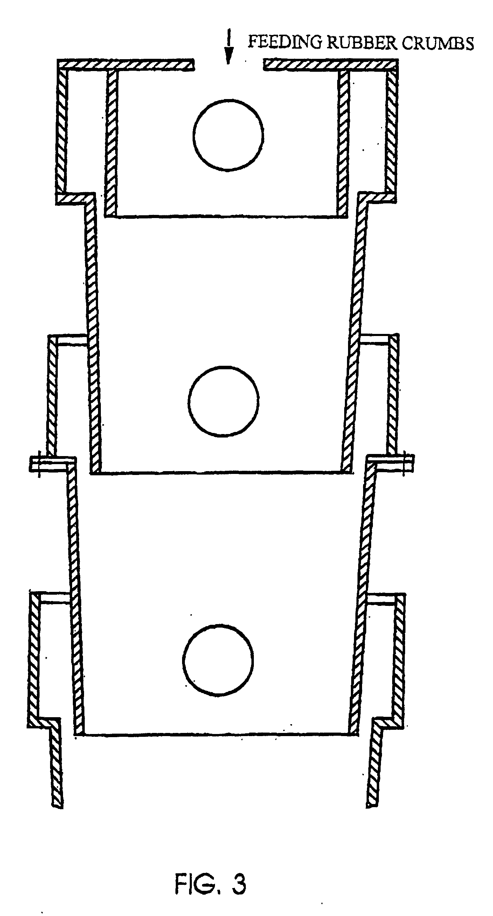

Fig. 3 shows a sectional view of a cooling chamber;
Fig. 4 shows a sectional view of a dosage means for supplying material into the cooling chamber;
Fig. 5 shows a sectional view of a dosage means for unloading processed material from the cooling chamber.

### Preferable Embodiment of Carrying Out the Invention

An installation which contains a coarse grinding unit, a cooling unit and a fine grinding unit is shown in Fig, 1. The coarse grinding unit consists of a bead cutter 1, tire cutter 2, grinder 3, magnetic separator 4 and aeroseparator 5. The cooling unit consists of a device 7 for cooling air and a cooling chamber 6. A turborefrigeration machine (TRM) is used as the device for cooling air. The fine grinding unit consists of a grinder 8, a magnetic separator 9, an aeroseparator 10 and a vibration screen 11.

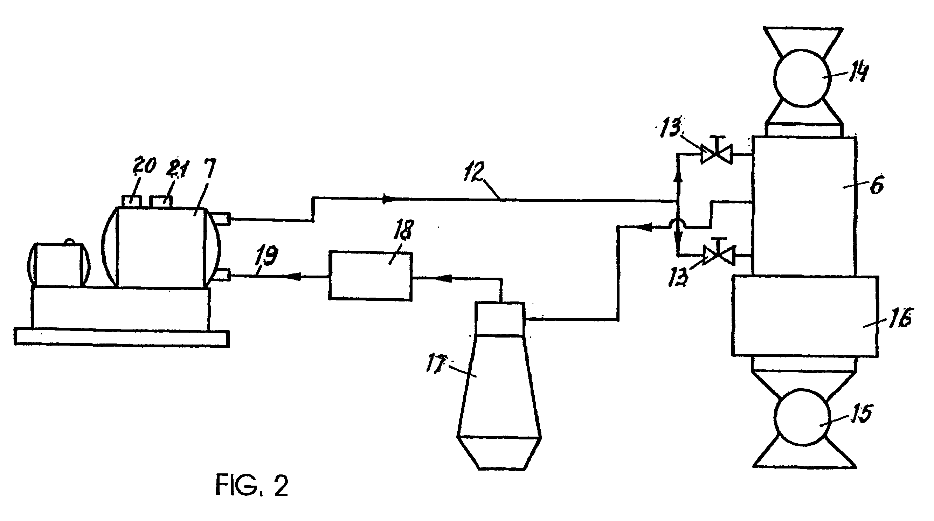

Fig. 2 shows the cooling unit comprising the air cooling device 7 which is connected to the cooling chamber 6 by means of a pipeline 12 for supplying cooled air. The cooled air passes into the cooling chamber 6 through openings for the supply of cooled air, which are positioned in the upper and lower parts of the cooling chamber 6. Control means 13 made in the form of valves, which are adjusted in accordance with the indications of a piezometer screen, are arranged on the pipeline 12 for supplying cooled air.

The cooled air exits from the cooling chamber 6 through an opening for the removal of cooled air, which is positioned in the middle part of the cooling chamber 6. Then this cooled air is directed to a cyclone 17 and to at least one filter 18, which are positioned on a pipeline 19 for the removal of cooled air from the cooling chamber 6. The cyclone 17 and filters 18 are necessary for the additional purification of cooled air exiting from the cooling chamber 6 of dust and other small particles of the material being processed, prior to this air being passed back into the device 7 for cooling air, in order to prevent dust and small particles of the material being processed from getting into the turborefrigeration machine (TRM). The filters are usually made of special stainless steel. Since the air has a low temperature, such air in the turborefrigeration machine is a coolant, and therefore after completion of the cycle it is discharged into the atmosphere. Thus, the TRM cycle is conditionally closed via the atmosphere.

Fig, 3 schematically shows the cooling chamber 6, which is a hollow, essentially vertically positioned cylinder made of stainless steel and contains at least one annular chamber positioned coaxially in respect to the cooling chamber 6 and having a greater size in the radial direction than that of the cooling chamber 6.

The annular chambers are made to create the free uniform passage of cooled air in the cooling chamber 6, ensuring the effective cooling of the material to be processed. Furthermore, the gaps made between the annular chamber and the cooling chamber prevent particles of the material being processed from getting into the space between the annular chamber and the cooling chamber, as a result of which the cooled air exits from the cooling chamber 6 in a sufficiently pure state without any impurities or contaminations. It should be noted that the upper gap is greater than the lower gap, since more intensive passage of the cooled air is necessary in the upper part of the cooling chamber 6, where loading the material is carried out.

The pressure of the cooled air at the input into the cooling chamber 6 is approximately equal to that of the atmosphere. The decrease of the pressure is equal to the hydraulic resistance of the poured layer of rubber crumbs. The consumption of the cooled air is equal to 1 kg/second or 3600 kg/hour. The rate of feeding cooled air is equal to 10-20 m/second.

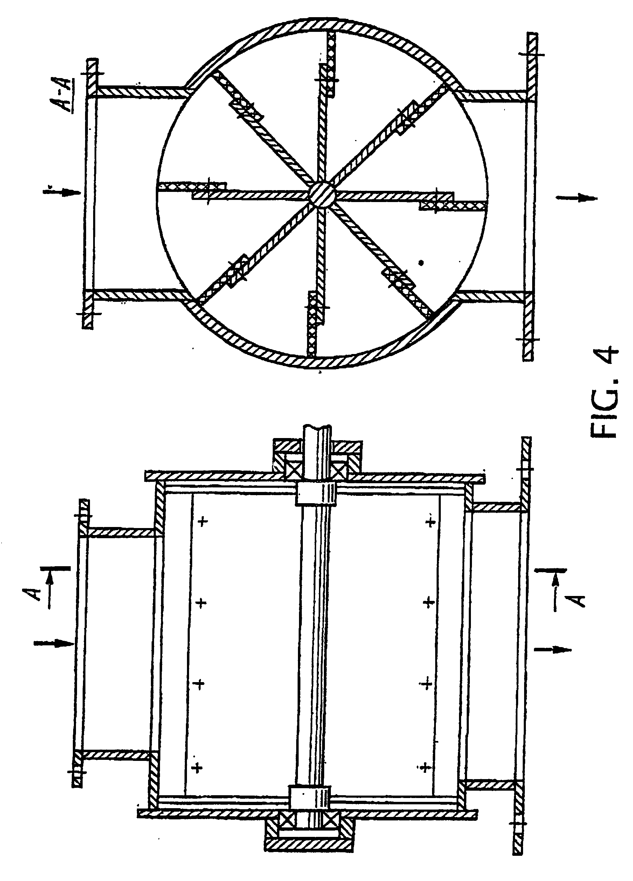

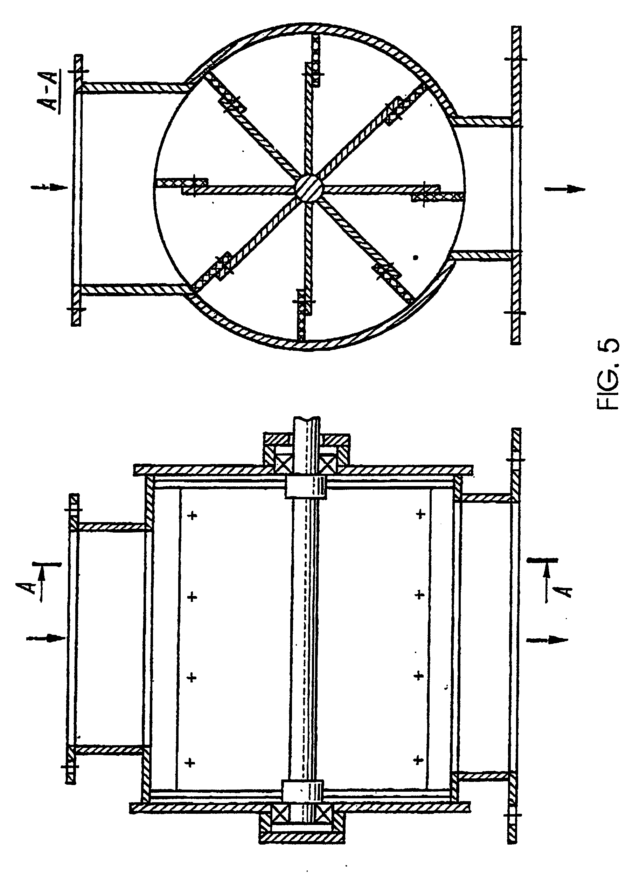

Fig. 4 shows a dosage means 14 for loading the material to be processed, the means 14 being positioned above an opening for the input of material into the cooling chamber 6, while Fig. 5 shows a dosage means 15 for unloading the material being processed, the means 15 being positioned under an opening of a discharge means for emitting the material from the cooling chamber 6, which means provide for loading and accordingly unloading a predetermined amount of the material being cooled. The dosage means 14 and 15 are positioned coaxially in respect to the cooling chamber and are actuated by means of a chain-gear motor. The rate at which the material being processed is fed is approximately up to 1 ton per hour. The dosage means 14 and 15, performing their direct purpose of loading and unloading the material being treated, additionally perform the role of a thermal valve, preventing warm cooling air from getting into the cooling chamber.

The dosage means 14 and 15 are a drum provided with vanes, which at their ends have rubber seals preventing the inflow of warm air from the atmosphere.

The cooling unit includes a discharge means 16 which is positioned coaxially in respect to the cooling chamber and is a belt conveyer provided with vanes. The discharge means serves to maintain the level of the material being processed in the cooling chamber and ensures uniform discharge of the material being processed from the cooling chamber.

The cooled air is fed to the lower and upper parts of the cooling chamber and is removed from the middle part of the cooling chamber. As a result of such a distribution of the flows of cooled air, wherewith the air flows over the material being processed from above and below, the most intensive cooling of the material is achieved. The rate of feeding the material to be processed is controlled in such a manner that the material being treated has a vitrification temperature at the exit from the cooling chamber that is about -80°C. The minimum rate of passage of the material through the cooling chamber 6 is 8 m/hour, while the maximum rate is 40 m/hour. Wherewith the cooled air at the input to the cooling chamber has a temperature of about -90°C and at the exit therefrom about - 70°C.

Since the present installation operates mainly on local feedstock, i.e., worn-out automobile tires are processed, the composition of which includes mainly synthetic rubber, whose vitrification temperature is much higher - -70° ÷ -85°C, than that of natural rubbers. Accordingly, when the rubber crumbs are overcooled to a temperature of-90°C and below, the consumer properties of the obtained product are impaired. The physicomechanical properties of the rubber crumbs change, since the molecular bonds are disturbed, and the elasticity is also reduced.

The method for processing is carried out in the following manner. Worn-out tires are cut into small pieces by grinding means 1, 2, 3. Even at that stage of grinding it is possible to separate the metal cord from the small rubber pieces by means of a magnetic separator 4. Then the obtained rubber crumbs are fed into the cooling chamber 6, which is arranged substantially vertically, wherein feeding the rubber crumbs into the cooling chamber 6 is carried out downwards under the action of gravity for rapid and intensive cooling of those crumbs. In the cooling chamber 6, the rubber crumbs are cooled to low temperatures of about -80°C by means of cooled air which is fed into the upper and lower parts of the cooling chamber from the device 7 for cooling air and is removed from the middle part of the cooling chamber 6. The uniform passage of the cooled air and its additional purification in the cooling chamber are simultaneously provided for by means of making at least one annular chamber positioned coaxially in respect to the cooling chamber with the formation of a gap between the cooling chamber and the annular chamber, and also by controlling the supply of the rubber crumbs into the cooling chamber and their removal therefrom by means of the dosage means 14 and 15. In order to obtain fine rubber powder, additional grinding of the rubber crumbs is carried out directly after the stage of cooling the rubber crumbs in the cooling chamber. Then, pulverization of the cooled pieces of material is carried out to obtain pulverized material, the textile fiber and pieces of unpulverized material, which may be used in the road construction field, are separated, the metal cord and steel are separated from the pulverized material by means of the magnetic separator 9, The obtained rubber crumbs are sorted on the vibration screen 11 by particle size in accordance with a consumer's requirements, are packaged and sent to the finished products storage area. The air emitted from the cooling chamber 6 is passed through the cyclone 17 and at least one filter 18 in order to completely purity it of fine particles of rubber dust. The purified air is returned to the device 7 for cooling air and is then ejected into the atmosphere.

The installation for processing polymer materials, e.g., rubber, operates in the following manner. Atmospheric air is fed through a branch pipe 20 into the device 7 for cooling air. The cooled air is fed from the device 7 for cooling air through the pipeline 12 to the upper and lower parts of the cooling chamber 6. At the same time, a predetermined amount of material to be processed is fed by means of the dosage means 14 into the cooling chamber 6. Due to the force of gravity, this material moves downwards in the cooling chamber 6, wherewith it is cooled by the flows of cold air to about -80°C. In view of the separate falling of the particles of rubber crumbs in the vertically positioned cooling chamber 6, cooling takes place more intensely and in a smaller period of time, vitrification takes place at higher temperatures as compared with known installations, which accordingly substantially reduces the power capacity of producing frozen crumbs as compared with the method or freezing its mass as a whole by stirring. Then the cooled material (rubber crumbs) is directed to a discharging device 16, from which it is fed for further processing by means of the dosage means 15. Cooled air is removed along the pipeline 19 from the middle part of the cooling chamber. This cooled air is directed to the cyclone 17 for additional preliminary purification of dust and fine particles of the material, which are in a suspended condition. The air is fed from the cyclone 17 to a screen filter 18 for additional final purification of dust and fine particles of the material and is then sent to the cooling device 7, from which the air is ejected into the atmosphere through a pipe 21.

Due to such a construction of the installation, the air ejected into the atmosphere does not contain any impurities or contaminants and accordingly does not contaminate the environment.

The results of conducted studies show that rubber crumbs obtained after cooling have high quality, actively enter into contact with other components during the production of different rubber mixtures, wherewith the strength of the bonds which develop is substantially greater as compared with rubber crumbs obtained in known installations.

When the claimed cooliny device is used in this installation for processing polymer materials, e.g., rubber, in particular, the following characteristics are obtained:
A high degree of purification of the final products - the content of metal in the rubber crumbs is 0.01% - 0.04%, the content of textile in the rubber crumbs is 0.3% - 0.8%. Furthermore, as already stated above, the use of such an installation ensures the prevention of contamination of the environment, since air, returned from the cooling chamber to the device for cooling air, is ejected into the atmosphere virtually pure without any impurities or fine particles of the rubber crumbs.

### Industrial Applicability

The present invention may be used to process polymer materials, rubber articles, worn-out tires from cars, trucks, bicycles etc., in order to obtain material suitable for reuse in the production of asphalt and other pavements, and also in other processing fields of industry.

## Claims

1. A method for processing polymer materials, e.g., rubber, comprising the steps of grinding material being processed into fine pieces, feeding the line pieces of material into a cooling chamber, cooling the pieces of material to low temperatures by means of feeding cooled air from a device for cooling air into the cooling chamber, pulverizing the cooled pieces of material to obtain pulverized material, separating textile fiber and pieces of unpulverized material from the pulverized material, separating steel and metal cord from the pulverized material to obtain rubber crumbs, **characterized in that** the cooling chamber is arranged substantially vertically, the rubber crumbs are fed into the cooling chamber downwards under the action of gravity in order to provide for their rapid and intensive cooling, cooled air is fed into upper and lower parts of the cooling chamber and spent air is removed from the middle part of the cooling chamber in order to provide uniform cooling of the rubber crumbs, uniform passage of the cooled air and its additional purification by means of making at least one annular chamber positioned coaxially in respect to the cooling chamber with the formation of a gap between them are provided, wherein simultaneously with the supply and removal of a flow of the cooled air, additional purification of the air being cooled in the cooling chamber is carried out by making gaps between the cooling chamber and the at least one annular chamber, and also by controlling the supply and removal of rubber crumbs in the cooling chamber by means of dosage means.

2. A method according to claim 1, **characterized in that** it comprises the additional step of grinding cooled rubber crumbs in order to obtain a fine rubber powder, which step is carried out directly after the step of cooling rubber crumbs to low temperatures in the cooling chamber.

3. A method according to claim 1, **characterized in that** it comprises the step of purifying the air emitted front the cooling chamber by means of a cyclone and at least one filter, which are arranged on the pipeline for removal of spent air from the cooling chamber.

4. An installation for processing polymer materials, e.g., rubber, comprising a means for grinding material into fine pieces, which means is connected to a cooling unit comprising a device for cooling air and a cooling chamber connected to the device for cooling air by means of pipelines and having openings for supplying rubber crumbs into the cooling chamber and removing them from that chamber and openings for supplying and removing cooled air, and a pipeline for removing air from the cooling chamber into the device for cooling air, and positioned successively after the cooling unit a means for crushing to pulverize the material, a means for separating textile fiber and pieces of unpulverized material and a magnetic separator for separating steel and metallic cord, **characterized in that** the cooling chamber is positioned substantially vertically, wherewith dosage means are arranged at an input into the cooling chamber and at an outlet therefrom, the dosage means being positioned coaxially in respect to the cooling chamber and made with the possibility of controlling the supply of rubber crumbs being processed into the chamber and removal therefrom, openings for the supply of cooled air are provided in the upper and lower parts of the cooling chamber, and an opening for removal of spent air is provided in the middle part of that chamber, wherewith the cooling chamber comprises at least one annular chamber positioned coaxially in respect to the cooling chamber with the formation of a gap between them and having a larger size in a radial direction than the cooling chamber.

5. An installation according to claim 4, **characterized in that** the ratio of the size of the annular chamber to that of the cooling chamber is within the range of from about 1.1 to about 1.2.

6. An installation according to claim 4, **characterized in that** it comprises a means for additionally grinding the cooled rubber crumbs, which is positioned directly after the cooling unit.

7. An installation according to claim 4, **characterized in that** it comprises a cyclone and at least one filter arranged on the pipeline for removing spent air from the cooling chamber.

8. An installation according to claim 4, **characterized in that** the dosage means, which are made in the form of a drum and serve for the uniform loading and unloading of the rubber crumbs being processed, are provided with vanes, at the ends of which rubber seals are arranged to prevent the inflow of warm air therein from the atmosphere.

9. An installation according to claim 4, **characterized in that** it additionally comprises control means, which are made in the form of valves and are arranged on the pipeline for supply of cooled air, in order to provide control of the cooling effect of the device for cooling air.

10. An installation according to claim 4, **characterized in that** it additionally comprises a discharge means which is made in the form of a belt conveyor provided with vanes and is positioned coaxially in respect to the cooling chamber and serves for maintaining the necessary level of the rubber crumbs being processed in the cooling chamber and for uniformly unloading them.
